# EUROPEAN PATENT APPLICATION

(11) **EP 4 641 716 A1**
(43) Date of publication of application: **29.10.2025**
(21) Application number: 24171533.3
(22) Date of filing: 22.04.2024
(51) Int. Cl.: H01M 8/04089, H01M 8/0432, H01M 8/0438, H01M 8/0444, H01M 8/04664

(54) **METHOD, CONTROL PROGRAM, COMPUTER-READABLE DATA CARRIER AND CONTROL DEVICE FOR CONTROLLING A FUEL CELL ARRANGEMENT, AS WELL AS FUEL CELL ARRANGEMENT AND VEHICLE COMPRISING SAME**

(71) Applicant: AIRBUS Operations GmbH, 21129 Hamburg (DE)
(72) Inventor: Liphardt, Leonard, 21129 Hamburg (DE); Wolff, Christian, 21129 Hamburg (DE); Kurre, Jens-Dietrich, 21129 Hamburg (DE)
(74) Representative: LKGLOBAL Lorenz & Kopf Patentanwalt Attorney at Law PartG mbB

(57) **Abstract**

A method for operating a fuel cell arrangement (2), in particular of a fuel cell system of a vehicle (1), such as an aircraft, a control program (11) for controlling a fuel cell arrangement (2), a fuel cell arrangement (2) and a vehicle (1), in particular aircraft, comprising a fuel cell arrangement (2), are provided, wherein the method comprises the steps of acquiring at least one reaction temperature value (Tx) representing a reaction temperature at which a conversion of fuel (F), such as hydrogen, takes place within the fuel cell arrangement (2); acquiring at least one system temperature value (T_{Y}) representing a system temperature of the fuel cell arrangement (2); monitoring a temperature difference (D) between the at least one reaction temperature value (Tx) and the at least one system temperature value (T_{Y}); and initiating at least one fuel starvation damage counter measure (I) for avoiding a local fuel starvation state (S) of the fuel cell arrangement (2) if the temperature difference (D) indicates a fuel starvation probability.

## Description

### Technical Field

The present disclosure relates to the field of hydrogen fuel systems for vehicles, in particular aircrafts. In particular, the disclosure relates to a method for operating a fuel cell arrangement, in particular of a fuel cell system of a vehicle, such as an aircraft, to a control program for controlling a fuel cell arrangement, in particular of a fuel cell system of a vehicle, such as an aircraft, to a computer-readable data carrier, to a control device for controlling an energy conversion arrangement of a vehicle, such as an aircraft, to a fuel cell arrangement for a vehicle, in particular an aircraft, and to a vehicle, in particular an aircraft.

### Technical Background

Alternative fuels are currently emerging for replacing fossil fuels in order to avoid their environmental impact. Vehicles, such as hydrogen powered fuel cell aircrafts, may use hydrogen to power their propulsion and also for power generation, in that the alternative fuels may replace conventional fuels, such as kerosene, for operating any fuel conversion device on the aircraft, including propulsion units and auxiliary power units (APUs). Converting hydrogen does not lead to a formation of carbon dioxide as well as other hydrocarbon related emissions and is thus seen as a pathway to an environmentally friendly and sustainable aviation.

However, operating aircrafts based on hydrogen involves new challenges in handling fuel cell systems used for converting hydrogen to electric energy. One problematic field in fuel cell systems is a possible fuel starvation where hydrogen is not sufficiently present at the fuel cell membrane in a required amount, thus leading to a local sub-stoichiometric state at the anode. Challenges arise from detecting such states to avoid damages to fuel cell membranes as addressed, for example, by Xiangyang Zhou, Hao Ji, Bing Li, and Cunman Zhang in "High-Repetitive Reversal Tolerant Performance of Proton-Exchange Membrane Fuel Cell by Designing a Suitable Anode", ACS Omega 2020 5 (17), 10099-10105 DOI: 10.1021/acsomega.0c00638; by Huicui Chen, Xin Zhao, Tong Zhang, Pucheng Pei, in "The reactant starvation of the proton exchange membrane fuel cells for vehicular applications: A review", Energy Conversion and Management, Volume 182, 2019, Pages 282-298, ISSN 0196-8904, https://doi.org/10.1016/j.enconman.2018.12.049; or by Obermaier, M., Rauber, M., Bauer, A., Lochner, T., Du, F. and Scheu, C. (2020), "Local Fuel Starvation Degradation of an Automotive PEMFC Full Size Stack", Fuel Cells, 20: 394-402. https://doi.org/10.1002/fuce.201900180.

The challenges and problems described and addressed by the prior art partly arise from that operating conditions for fuel cell systems are commonly developed to set a certain ratio of liquid and gaseous product water which are produced by the conversion of hydrogen and oxygen to generate electricity and heat as a by-product. Usually, these operating conditions are simulated and tested under steady-state conditions. The results of both, simulation, and testing, are a variety of polarization curves.

However, such a development based on steady-state assumptions only partly reflects the behaviour of a fuel cell under dynamic conditions in the field. This has the consequence that the developed operation conditions do not set the operation conditions as they actually occur. This may lead to e.g., water accumulation on the anode side and provokes local fuel starvation leading to unwanted degradation mechanisms, which may finally lead to a complete stack loss if counter measures are not taken. In addition, the detection of a local fuel starvation is not easy even when a Cell Voltage Monitoring Unit is available.

CN 115084593 A, for example, relates to a fuel cell fault diagnosis method based on a nonlinear impedance spectroscopy, and comprising the steps of designing different types and different degrees of fault conditions, applying AC (Alternating Current) disturbance with a set amplitude value to a fuel cell, and collecting excitation current and response voltage; performing fast Fourier transform to obtain harmonic response of each order under a target frequency, and calculating a first-order frequency response function and a second-order frequency response function; forming a nonlinear impedance fault data set, and performing fault feature extraction and dimension reduction on the data set through principal component analysis; according to the fault data set after dimension reduction, constructing a fault diagnosis model and performing training; and applying alternating current disturbance with a set amplitude to the fuel cell, collecting voltage and current data, calculating a frequency response function, inputting the frequency response function into the trained fault diagnosis model after dimensionality reduction, and diagnosing the current state of health of the fuel cell in real time.

CN 113540534 A describes a starvation fault diagnosis method for a proton exchange membrane fuel cell stack. The method comprises the step of calculating index parameters of starvation fault diagnosis through real and imaginary part values corresponding to EIS (Electrochemical Impedance Spectroscopy) specific frequency and a fuel cell internal resistance model; by using the starvation data obtained through simulation and normal electric pile data as initial analysis data, performing a principal component analysis method and a K-means clustering method for classification to acquire two centroid points mu1 and mu2 of a normal cluster set and a starvation cluster set; acquiring the experimental data points under different operation conditions by using a principal component analysis method and a K-means clustering method, comparing the data points with a mass center point mu1 of a normal data cluster and a mass center point mu2 of a starvation data cluster, so that whether the galvanic pile has a starvation fault and the degree of the starvation fault at the moment can be judged.

JP 2020-205202 A deals with a fuel cell system in which a decrease in accuracy in determining, whether a fuel deficiency state is present, can be avoided while reduction in the manufacturing cost is aimed to be achieved. Such a fuel cell system is supposed to be constituted of a first fuel cell and a second fuel cell in each of which a plurality of single cells of the same type are laminated, the fuel cell and having a first voltage detection device and a second voltage detection device, respectively, the fuel cell system comprises a control device that controls the fuel cell on the basis of the detection result of the voltage detection device, the first voltage detection device detects a cell voltage every N sheets on average, and the second voltage detection device detects the voltage of the entire second fuel cell or the voltage of a single cell every M sheets on average more than N sheets. The control device determines whether any unit cell of the second fuel cells is in fuel deficiency state on the basis of the detection result of the first voltage detection device when a predetermined condition that the states of the first and second fuel cells can be regarded to be close to each other is satisfied.

Systems and methods for handling fuel starvation issues in hydrogen fuel cells, as known from the prior art, may not fully satisfy certain requirements regarding future operation, in particular on aircraft. This is particularly the case in view of that the known systems and methods, such as cell voltage monitoring (CVM) or EIS may not be able to detect local fuel cell starvation in a timely manner. This in turn may lead to those fuel starvation events, which are detected too late for initiating effective countermeasures which may thus fail in preventing performance loss (aging) and finally total stack loss.

### Summary

It may thus be seen as an object to provide improved ways of detecting and countering fuel cell starvation issues. Furthermore, it can be seen as an object, to enhance reliability and safety of fuel cell systems. These objects are at least partly achieved by the subject-matter of the independent claims.

According to an aspect, a method for operating a fuel cell arrangement, in particular of a fuel cell system of a vehicle, such as an aircraft, is provided, the method comprising the steps of acquiring at least one reaction temperature value representing a reaction temperature at which a conversion of fuel, such as hydrogen, takes place within the fuel cell arrangement; acquiring at least one system temperature value representing a system temperature of the fuel cell arrangement; monitoring a temperature difference between the at least one reaction temperature value and the at least one system temperature value; and initiating at least one starvation damage counter measure for avoiding a local fuel starvation of the fuel cell arrangement if the temperature difference indicates a fuel starvation probability.

According to an aspect, a control program for controlling a fuel cell arrangement, in particular of a fuel cell system of a vehicle, such as an aircraft, is provided, wherein the control program comprises instructions which, when the control program is executed by a control device, cause the control device to carry out a corresponding method.

According to an aspect, a computer-readable data carrier having stored thereon the control program is provided.

According to an aspect, a control device for controlling an energy conversion arrangement of a vehicle, such as an aircraft, is provided, wherein the control device is configured to carry out a corresponding method and/or comprises a corresponding computer-readable data carrier.

According to an aspect, a fuel cell arrangement for a vehicle, in particular an aircraft, is provided, configured to carry out a corresponding method and/or comprising a corresponding control device.

According to an aspect, a vehicle, in particular an aircraft, is provided, comprising a corresponding fuel supply arrangement.

The proposed solution provides an alternative approach for detecting and countering fuel cell starvation issues in all kinds of apparatuses, vehicles, and alike, including but not limited to aircraft. This includes energy systems for aircrafts comprising fuel cells for aircraft propulsion and/or APUs. Compared to the prior art, the proposed solution allows to increase the lifetime, reliability, and safety of fuel cell systems in particular under operating conditions involving highly dynamic loads and changing environments. An advantage of the proposed solution is that previously undetectable failure cases involving local fuel starvation can be made detectable. As a consequence, irreversible stack degradation and finally stack loss can be avoided.

Acquiring the at least one reaction temperature value and/or system temperature value may involve measuring respective representative temperature values. For measuring the respective representative temperature values, any kind of temperature measurement means, such as thermocouples, Positive Temperature Coefficient (PTC) thermistors, infrared measuring devices, including infrared cameras, or alike, may be used. As starvation damage counter measures, for example, a cooling capacity for the fuel cell arrangement may be increased, for instance, by increasing a coolant flow. Alternatively, or additionally, for stopping a local fuel starvation, a hydrogen volumetric flow provided to the fuel cell arrangement, a hydrogen recirculation of the fuel cell system, and/or a hydrogen concentration within the fuel cell system may be increased, for example, by opening a purge valve at the fuel cell system (e.g., anode) outlet.

The solution particularly provides control measures and respective control devices which are suitable for all kinds of apparatuses, including fault intolerant and/or safety-critical systems. A corresponding apparatus comprising a fuel cell arrangement may be provided in particular in form of a vehicle, such as a land vehicle, watercraft, aircraft and/or spacecraft, or technical appliance, and/or in the form of any utility provider infrastructure, such as power plants, energy network installations, or alike. A control device for solving the underlying problem may comprise a corresponding computing device. The control device may be implemented as and/or include a respective computing device. The computer-readable data carrier may include and/or be comprised of a computer-readable medium and/or a data carrier signal.

Further developments can be derived from the dependent claims and from the following description. Features described with reference to devices and arrangements may be implemented as method steps, or vice versa. Therefore, the description provided in the context of the control device, fuel cell arrangement, and/or vehicle applies in an analogous manner also to respective methods. In particular, the functions of the control device, fuel cell arrangement, and/or vehicle and of their or its components, respectively, may be implemented as method steps of respective methods and the method steps may be implemented as functions of the control device, fuel cell arrangement, and/or vehicle, and respective apparatus features.

According to an embodiment of a method, the at least one reaction temperature value and/or the at least one system temperature value are or is, respectively, being acquired at and/or within at least one fuel cell stack of the fuel cell arrangement. The at least one reaction temperature value can be individually acquired for each of the fuel cells stacks of the fuel cell arrangement and/or for a single fuel cell element. Thereby, respective temperature differences may be monitored in a preferably direct and differentiated manner. This allows for further improving the detection and localisation of potential fuel starvation events.

According to an embodiment of a method, the at least one reaction temperature value is being acquired at an anode side of the fuel cell arrangement. experience has shown that fuel starvation issues may particularly arise at the anode side of a fuel cell. Consequently, measuring the at least one reaction temperature value at the anode side further helps in quickly detecting potential fuel starvation events.

According to an embodiment of a method, the at least one reaction temperature value represents an exhaust temperature of exhausts of the fuel cell arrangement. The exhausts may comprise any reaction product of the fuel conversion in the fuel cell arrangement. Measuring the at least one reaction temperature value such that it represents the exhaust temperature and/or respective temperature of the conversion products further helps in quickly and reliably detecting potential fuel starvation events.

According to an embodiment of a method, the at least one reaction temperature value is being acquired in the region of at least one anode exhaust outlet of the fuel cell arrangement. The at least one reaction temperature value can be individually acquired at each stack exhaust outlet of the fuel cell arrangement. Acquiring the at least one reaction temperature value in the region of anode exhaust outlets helps in providing a combined parameter for an assessment of any temperature changes and any fuel cells connecting to the respective anode exhaust outlet and/or stack exhaust outlet. Thereby it can be avoided that potential fuel starvation events remain undetected.

The at least one system temperature value may be acquired in a thermal management system of the fuel cell arrangement. The thermal management system may be most suitable for acquiring the at least one system temperature value as the thermal management system helps in regulating an overall temperature level of the fuel cell arrangement. This helps in providing the at least one system temperature value as a reliable parameter for determining the temperature difference and securely assessing the occurrence of potential fuel starvation events.

According to an embodiment of a method, the at least one system temperature value represents a coolant temperature of a cooling medium of the fuel cell arrangement. The cooling medium is used for regulating an overall temperature level of the fuel cell arrangement. Thus, acquiring the at least one system temperature value such that it represents the coolant temperature further helps in providing the at least one system temperature value as a reliable parameter for determining the temperature difference and securely assessing any occurrence of potential fuel starvation events.

According to an embodiment of a method, the at least one system temperature value is measured at coolant outlet and/or coolant inlet of at least one fuel cell unit of the fuel cell arrangement. In particular in the region of the coolant outlet and/or the coolant inlet, the respective coolant temperature may indicate any representative system temperature value of the fuel conversion in the fuel cell arrangement. Thereby, measuring the at least one system temperature value at the coolant outlet and/or the coolant inlet further helps in quickly and reliably detecting potential fuel starvation events.

According to an embodiment of a method, the temperature difference is being compared to a temperature threshold value indicating a fuel starvation probability. The monitoring process should cover any temperature differences that may occur within a certain monitoring time frame which preferably is in the region of tenth of seconds or even below. The temperature threshold value can represent an allowed temperature difference and may be determined in the manner of a gliding or moving scale for the determination of whether the temperature difference indicates potential fuel starvation events. This further helps in quickly and reliably detecting any fuel starvation events under dynamic operating conditions.

According to an embodiment of a method, an oxygen concentration value, a carbon dioxide concentration value, and/or carbon monoxide concentration value within the fuel cell arrangement is monitored and being compared to a respective concentration threshold value indicating a fuel starvation probability. In particular, the oxygen concentration value, the carbon dioxide concentration value and/or the carbon monoxide concentration value may be measured. Monitoring the oxygen concentration value, the carbon dioxide concentration value, and/or the carbon monoxide concentration value can be used as an alternative and/or additional solution for detecting potential fuel starvation events. In other words, monitoring an oxygen concentration value and/or a carbon dioxide concentration value and/or a carbon monoxide concentration value can be used in conjunction with previously described temperature-based assessments and can be provided as an alternative way for detecting potential fuel starvation events. Thereby, in particular the detection of any potential fuel starvation events under dynamic conditions can be further improved.

According to an embodiment of a method, an assessment of the indication of a fuel starvation probability involves a prediction of the at least one reaction temperature value, the at least one system temperature value, and/or the temperature difference during static and/or dynamic operation of the fuel cell arrangement. The overall and/or individual temperature values during static and/or dynamic operation may be predicted. The prediction is preferably carried out in real-time, for example, through Artificial Intelligence (Al) / Machine learning (ML) algorithms, and may enable a timely forecast and/or projection of possible counter measures to avoid any fuel starvation event and subsequent carbon corrosion processes. Thereby, a continuous control of the fuel cell arrangement can be implemented. Such a continuous control allows for avoiding any critical operational states of the fuel cell arrangement, and thus further helps to prevent fuel starvation events.

### Brief Description of the Drawings

The subject matter will hereinafter be described in conjunction with the following drawing figures, wherein like numerals denote like elements, and wherein:
Fig. 1 is a schematic illustration of vehicle the form of an aircraft comprising a fuel cell arrangement.
Fig. 2 is a schematic illustration of the fuel cell arrangement.
Fig. 3 is a schematic illustration of a fuel cell unit of the fuel cell arrangement in a normal operation state.
Fig. 4 is a schematic illustration of a fuel cell unit of the fuel cell arrangement in a fuel starvation state.
Fig. 5 is a schematic diagram containing a temperature difference between a reaction temperature value and a system temperature value.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

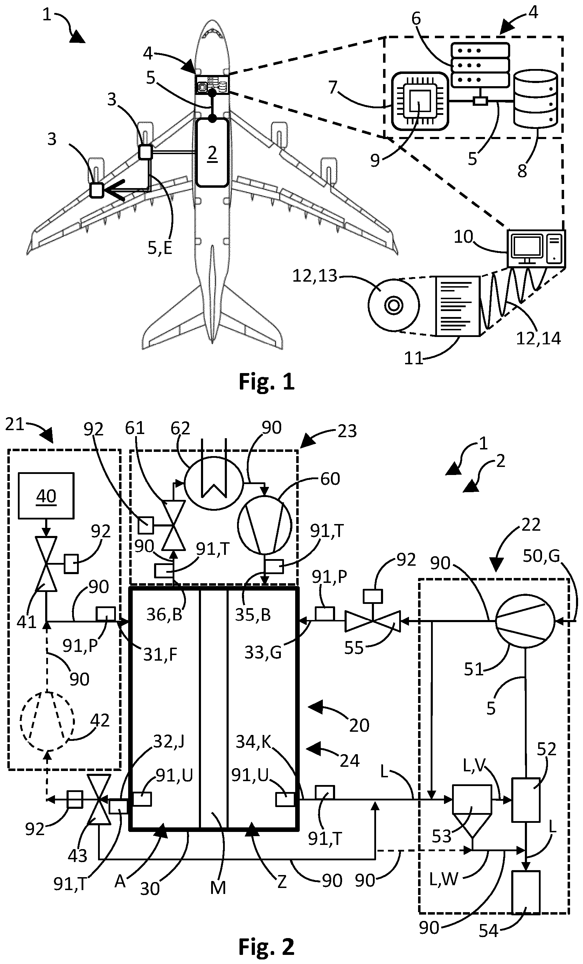

Fig. 1 shows a schematic representation of an apparatus in the form of a vehicle 1, such as an aircraft, comprising a fuel cell arrangement 2 configured to provide electrical power E power to the vehicle 1, for example, to propulsion units 3 thereof. A control device 4 for controlling the operation of the vehicle 1, fuel cell arrangement 2, and/or propulsion units 3 can be provided as a part of the vehicle 1 and/or can be integrated into the fuel cell arrangement 2 itself. The control device 4 that can be connected to the vehicle 1, the fuel cell arrangement 2, and/or the propulsion units 3 via respective transmission lines 5, which can be configured to transmit data and/or electrical power E in any kind of wired and/or wireless manner.

The control device 4 can comprise a processing unit 6, an interface module 7, a storage module 8 and/or a control element 9 which can be connected to each other via the respective transmission lines 5 which may be configured to contact any kind of information, data, power and/or energy. The vehicle 1 and/or the fuel cell arrangement 2 can be provided with a computing device 10 that may comprise the control device 4 or vice versa. A computer program 11 can be stored on a computer-readable data carrier 12 which may take the form of a computer-readable medium 13 and/or data carrier signal 14. The control device 4 may comprise the computing device 10, the computer program 11, the computer-readable data carrier 12, and/or any kind of control element as well as transmission lines 5 exchanging data between the respective above-mentioned components. Control elements 9 may be any kind of data source, such as a measuring element, sensor, output device and/or actuator of the vehicle 1, the fuel cell arrangement 2 and/or the propulsion units which may constitute a part of a control system for controlling a certain function thereof, for example, by connecting to the control elements 9 through the interface module 7.

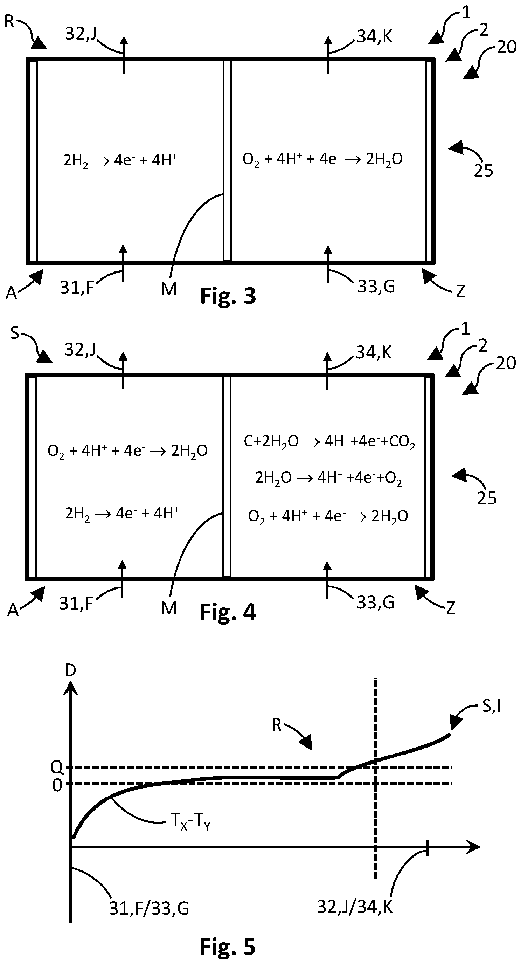

Fig. 2 is a schematic illustration of the fuel cell arrangement 2 which comprises at least one fuel cell unit 20, a fuel supply arrangement 21, an air supply arrangement 22 and a thermal management system 23. The fuel cell unit 20 may include a number of fuel cell stacks 24 each comprising at least one fuel cell element 25 (see Figs. 3 and 4). Each fuel cell stack 24 has an anode side A and a cathode side Z separated from each other by a membrane M.

The fuel cell unit 20 may be provided with an enclosure 30 which may enclose at least one fuel cell stack 24. The enclosure 30 is provided with an anode inlet 31, an anode outlet 32, a cathode inlet 33, and a cathode outlet 34. Through the anode inlet 31, a fuel F, such as hydrogen, is provided to the fuel cell unit 20, in particular the anode side A thereof. Through the anode outlet 32, anode exhausts J are discharged from the fuel cell unit 20, in particular the anode side A thereof. Through the cathode inlet 33, a conversion gas G, such as air, for converting the fuel F, is provided to the fuel cell unit 20, in particular the cathode side Z thereof. Through the cathode outlet 34, cathode exhausts K are discharged from the fuel cell unit 20, in particular the cathode side Z thereof. Furthermore, the enclosure has a coolant inlet 35 and a coolant outlet 36 for leading a cooling medium B for cooling the fuel cell unit 20 to and away therefrom, respectively.

The fuel supply arrangement 21, comprises a fuel tank 40 and the fuel inlet valve 41. Optionally, the fuel supply arrangement 21 may comprise a recirculation pump 42. The fuel tank 40 contains the fuel F which is provided to the anode inlet 31 of the fuel cell unit 30 through the fuel inlet valve 41 in a controllable manner. The recirculation pump 42 may recirculate anode exhausts J from the anode outlet 32 to the anode inlet 31. The recirculation pump 42 and/or an outlet valve 43 may regulate the amount of recirculated anode exhausts J in a controllable manner.

The air supply arrangement 22 has an air inlet 50, a compressor 51, an expansion device in the form of a turbine 52, a liquid separator 53 and an exhaust outlet 54. Through the air inlet 50, outside air or any other conversion gas G can be provided to the fuel cell arrangement 2. The compressor 51 compresses the conversion gas G in order to be provided to the fuel cell unit 20 through the cathode inlet 33. The amount and/or a pressure of the conversion gas G provided to the fuel cell unit 20 can be regulated by means of the compressor 51 and/or an inlet valve 55 in controllable manner.

The compressor 51 can at least partly be driven by energy generated by means of the turbine 52 that can expand the exhausts L. That energy can be transferred from the turbine 52 to the compressor 51. Before entering the turbine 52, the exhausts L may be separated into vapour V and water W by means of the liquid separator 53. The vapour V can be led through the turbine 52 while the water W bypasses the turbine 52. The exhausts L from the turbine 52 may be re-joined with the exhausts L from the liquid separator 53 bypassing the turbine 52 in order to be then discharged from the vehicle 1 and/or fuel cell arrangement 2 through the exhaust outlet 54.

The thermal management system 23 comprises a coolant pump 60, a coolant valve 61 and a heat exchanger 62. A flow of the cooling medium B through the thermal management system 23, in particular the heat exchanger 62, and the fuel cell unit 10 can be regulated through the coolant pump 60 and/or the coolant valve 61 in a controllable manner. Furthermore, the coolant valve 61 may allow an intake and/or discharge of the coolant B to and from, respectively, the thermal management system 23. Through the heat exchanger 62, heat contained in the coolant B can be dissipated outside of the thermal management system 23 as desired and/or required.

Ducts 90 of the fuel cell arrangement 2 can be provided in any number, form, shape and/or material desired or required for connecting the components of the fuel cell arrangement 2 to each other in order guide and/or process the fuel F, the conversion gas G, the cooling medium B, the anode exhausts J, the cathode exhausts K, the exhausts L, the vapour V and/or the water W as desired or required for fulfilling respective function. The ducts 90 and/or the components can be provided with sensors 91 and/or actuators 92 as desired and/or required. The sensors 91 and/or actuators 92 can be configured to acquire, measure, set, control and/or regulate, respectively, any pressure P, temperature T and/or chemical composition U of the components of the fuel cell arrangement 2 the fuel F, the conversion gas G, the cooling medium B, the anode exhausts J, the cathode exhausts K, the exhausts L, the vapour V and/or the water W, as desired or required for fulfilling respective function. The ducts 90, sensors 91 and/or actuators 92 may serve as, be configured as comprise, and/or constitute the control elements 9 for controlling any function of the vehicle 1 and/or the fuel cell arrangement 2, and/or propulsion unit 3 during operation thereof by means of the control device 4.

Fig. 3 is a schematic illustration of the fuel cell unit 20 of the fuel cell arrangement 2 in a regular or normal operation state R. In present example, a reaction of the fuel F in the form of hydrogen H with the conversion gas G in the form of oxygen O within one of the fuel cell elements 25 of the fuel cell unit 20 is illustrated in an exemplary manner. Under normal operation conditions R, the reaction mechanisms between hydrogen H and oxygen O takes place at the anode A as a Hydrogen H oxidation (Hydrogen dissociation) reaction and on the cathode side Z the Oxygen O reduction (water generation) reaction. The water W generation is an exothermic reaction and is responsible for a heating of the fuel cell element 25, whereas the Hydrogen H reaction is a slightly endothermic reaction, and its thermal contribution is usually negligible. The thermal management system 23 can be designed with respect to the thermal contribution of the reaction on the cathode side Z. For this reason and due to the fact that the cooling medium B is the fluid with the highest thermal mass, any gas temperatures T₃₂ at the anode outlet 32 and/or gas temperatures T₃₄ at the cathode outlet 34 should be equal or at least close to the temperature T_{B} of the coolant B.

Fig. 4 is a schematic illustration of the fuel cell unit 20 of the fuel cell arrangement with the fuel cell element 25 in a fuel starvation state S. In case of a local fuel starvation reaction, the reaction mechanisms change in comparison to the normal state R along the way through the anode and cathode channels.

The water W formation reaction takes place partially on the anode side A and on the cathode side a carbon C corrosion takes place. Both reactions are strongly exothermic (dh_{H2O}: -286 kJ/mol and dh_{CO2}: -394 kJ/mol). This will cause a temperature increase of the gas temperatures T₃₂ and T₃₄ to values above the coolant temperature T_{B} of the coolant B and thus to a characteristic temperature difference D. In particular gasses at the anode side have a relatively small thermal mass and therefore, significantly react very sensitive to the heat generated in terms of temperature changes.

Fig. 5 is a schematic diagram containing a temperature difference D between a reaction temperature value Tx, for example the gas temperatures T₃₂ and/or T₃₄, and a system temperature value T_{Y}, for example, the coolant temperature T_{B}. For example, the temperature difference D between the coolant outlet 36 and the anode outlet 32 and/or the cathode outlet 34 may be monitored by means of sensors 91 measuring respective temperature values T. When the temperature difference D exceeds a predefined threshold Q, this may indicate a potential fuel starvation event. In order to prevent that the starvation state S sets in, an intervention I and/or countermeasure may be initiated by the control device 4, for example, by increasing the fuel F flow through a corresponding regulation of the fuel inlet valve 41 and/or the recirculation pump 42, possibly in combination with purging through the outlet valve 43, and alternatively, or additionally, by increasing the cooling capacity through increasing the amount and/or lowering the temperature T_{B} of the cooling medium B through respective adjustments to the operation, e.g. of the coolant pump 60, the coolant valve 61 and/or the heat exchanger 62.

To detect critical temperature differences D between a reaction temperature value Tx, for example the gas temperatures T₃₂ and T₃₄, and a system temperature value T_{Y}, for example, the coolant temperature T_{B}, preferably between gas and coolant temperatures, and in order to initiate countermeasures I, respective logic may be implemented in the control device 4, the computing device 10 and/or the computer program 11. Such a logic may rely on historical measurement data that can be stored and accessed by the processing unit 6 in the storage module 8. Thereby, any logic, including artificial intelligence (Al) as or machine learning (ML) algorithms may use such a historic data in order to develop heuristically as and/or statistically based rule sets for assessing, whether the normal operation state R or the starvation state S is at hand, and what countermeasures I may be taken in order to prevent any damage to the affected fuel cell element 25. Alternatively, or additionally, a preferably real-time prediction of the overall and/or individual temperature values during static and/or dynamic operation through AI/ML algorithms may enable a timely forecast and/or projection of possible counter measures I to avoid any fuel starvation event and subsequent carbon corrosion processes.

### List of Reference Signs

- 1: vehicle / aircraft
- 2: fuel cell arrangement
- 3: propulsion unit
- 4: control device
- 5: transmission line
- 6: processing unit
- 7: interface module
- 8: storage module
- 9: control element
- 10: computing device
- 11: computer program
- 12: computer-readable data carrier
- 13: computer-readable medium
- 14: data carrier signal
- 20: fuel cell unit
- 21: fuel supply arrangement
- 22: air supply arrangement
- 23: thermal management system
- 24: fuel cell stack
- 25: fuel cell element
- 30: enclosure
- 31: anode inlet
- 32: anode outlet
- 33: cathode inlet
- 34: cathode outlet
- 35: coolant inlet
- 36: coolant outlet
- 40: fuel tank
- 41: fuel inlet valve
- 42: recirculation pump
- 43: outlet valve
- 50: air inlet
- 51: compressor
- 52: turbine
- 53: liquid separator
- 54: exhaust outlet
- 55: inlet valve
- 60: coolant pump
- 61: coolant valve
- 62: heat exchanger
- e: electron
- A: anode side
- B: cooling medium
- C: carbon
- D: temperature difference
- E: electrical power
- F: fuel
- G: conversion gas / air / oxygen
- H: hydrogen
- I: intervention / countermeasure
- J: anode exhausts
- K: cathode ehxausts
- L: exhausts
- M: membrane
- O: Oxygen
- P: pressure
- Q: Threshold
- R: normal operation state
- S: starvation state
- T: temperature value
- U: composition / concentration
- V: vapour
- W: water
- X: reaction
- Y: system
- Z: cathode side

## Claims

1. Method for operating a fuel cell arrangement (2), in particular of a fuel cell system of a vehicle (1), such as an aircraft, the method comprising the steps of
acquiring at least one reaction temperature value (Tx) representing a reaction temperature at which a conversion of fuel (F), such as hydrogen, takes place within the fuel cell arrangement (2);
acquiring at least one system temperature value (T_{Y}) representing a system temperature of the fuel cell arrangement (2);
monitoring a temperature difference (D) between the at least one reaction temperature value (Tx) and the at least one system temperature value (T_{Y}); and
initiating at least one starvation damage counter measure for avoiding a local fuel starvation state (S) of the fuel cell arrangement (2) if the temperature difference (D) indicates a fuel starvation probability.

2. Method for operating a fuel cell arrangement (2) according to claim 1,
wherein the at least one reaction temperature value (Tx) and/or the at least one system temperature value (T_{Y}) are or is, respectively, being acquired at and/or within at least one fuel cell stack (20) and/or fuel cell element (25) of the fuel cell arrangement (2).

3. Method for operating a fuel cell arrangement (2) according to claim 1 or 2, wherein the at least one reaction temperature value (Tx) is being acquired at an anode side (A) of the fuel cell arrangement (2).

4. Method for operating a fuel cell arrangement (2) according to at least one of claims 1 to 3, wherein the at least one reaction temperature value (Tx) represents an exhaust temperature (T) of exhausts (L) of the fuel cell arrangement.

5. Method for operating a fuel cell arrangement (2) according to at least one of claims 1 to 4, wherein the at least one reaction temperature value (Tx) is being acquired in the region of at least one anode exhaust outlet (32) of the fuel cell arrangement (2).

6. Method for operating a fuel cell arrangement (2) according to at least one of claims 1 to 5, wherein the at least one system temperature value (T_{Y}) represents a coolant temperature (T_{B}) of a cooling medium (B) of the fuel cell arrangement (2).

7. Method for operating a fuel cell arrangement (2) according to at least one of claims 1 to 6, wherein the at least one system temperature value (T_{Y}) is measured at coolant outlet (36) and/or coolant inlet (35) of at least one fuel cell unit (20) of the fuel cell arrangement (2).

8. Method for operating a fuel cell arrangement (2) according to at least one of claims 1 to 7, wherein the temperature difference (D) is being compared to a temperature threshold value (Q_{T}) indicating a fuel starvation probability.

9. Method for operating a fuel cell arrangement (2) according to at least one of claims 1 to 8, wherein an oxygen concentration value (Uo), a carbon dioxide concentration value (U_{CO2}), and/or a carbon monoxide concentration value (Dec) within the fuel cell arrangement (2) is monitored and being compared to a respective concentration threshold value (Qu) indicating a fuel starvation probability.

10. Method for operating a fuel cell arrangement (2) according to at least one of claims 1 to 9, wherein an assessment of the indication of a fuel starvation probability involves a prediction of the at least one reaction temperature value (Tx), the at least one system temperature value (T_{Y}), and/or the temperature difference (D) during static and/or dynamic operation of the fuel cell arrangement (2).

11. Control program (11) for controlling a fuel cell arrangement (2), in particular of a fuel cell system of a vehicle (1), such as an aircraft, wherein the control program (11) comprises instructions which, when the control program is executed by a control device (4), cause the control device (4) to carry out a method of at least one of claims 1 to 10.

12. Computer-readable data carrier (12) having stored thereon the control program according to claim 11.

13. Control device (4) for controlling an energy conversion arrangement of a vehicle (1), such as an aircraft, wherein the control device (4) is configured to carry out a method of at least one of claims 1 to 10 and/or comprises a computer-readable data carrier (12) according to claim 12.

14. A fuel cell arrangement (2) for a vehicle (1), in particular an aircraft, configured to carry out a method according to at least one of claims 1 to 10 and/or comprising a control device (4) according to claim 13.

15. Vehicle (1), in particular aircraft, comprising a fuel cell arrangement (2) according to claim 14.
